**Europäisches Patentamt**

**European Patent Office**

**Office européen des brevets**

(11) Veröffentlichungsnummer: **0 044 068**
**A2**

(12) **EUROPÄISCHE PATENTANMELDUNG**

(21) Anmeldenummer: **81105475.8**

(22) Anmeldetag: **13.07.81**

(51) Int. Cl.³: **H 01 G 9/00**

(30) Priorität: **16.07.80 DE 3026986**

(43) Veröffentlichungstag der Anmeldung:
**20.01.82 Patentblatt 82/3**

(84) Benannte Vertragsstaaten:
**DE FR GB IT SE**

(71) Anmelder: **SIEMENS AKTIENGESELLSCHAFT**
**Postfach 22 02 61**
**D-8000 München 22(DE)**

(72) Erfinder: **Soldner, Rudolf, Dr. Dipl.-Chem**
**21 Jalan Kebaya**
**1027 Singapore(SG)**

(54) **Wickel-Elektrolytkondensator.**

(57) Die Erfindung betrifft einen Wickel-Elektrolytkondensator, welcher aus miteinander verwickelten Elektrodenfolien und mit einem Betriebselektrolyt getränkten Abstandshaltern besteht. Der Wickel (1) wird durch einen Schrumpfschlauch (3) zusammengehalten. Die Erfindung wird insbesondere bei Elektrolytkondensatoren mit Lössungsmittel-Elektrolyten auf der Basis N-Dimethylformamid, γ- Butyrolacton oder Methoxyethanol verwendet.

EP 0 044 068 A2

Croydon Printing Company Ltd.

SIEMENS AKTIENGESELLSCHAFT       Unser Zeichen
Berlin und München              VPA
                                80 P 1 1 0 6 E

## Wickel-Elektrolytkondensator

Die Erfindung betrifft einen Wickel-Elektrolytkondensator, welcher aus miteinander verwickelten Elektrodenfolien und mit einem Betriebselektrolyt getränkten Abstandshaltern besteht.

Die Elektrodenfolien derartiger Kondensatoren bestehen
aus einem sogenannten Ventilmetall, d.h. aus einem
Metall, auf dessen Oberfläche eine Oxidschicht gebildet
werden kann, welche den Strom in einer Richtung sperrt
und in der anderen durchläßt. Beispiele für derartige
Ventilmetalle sind Aluminium, Tantal, Zirkon, Niob oder
Titan. Dabei ist die im Kondensator als Anode dienende
Folie mit der elektrochemisch erzeugten Oxidschicht versehen, wobei diese Oxidschicht als Dielektrikum des
Kondensators wirkt. Die Anodenfolie kann ferner zur
Erhöhung der Volumenkapazität durch einen elektrochemischen Ätzprozeß aufgerauht sein. Für bestimmte Anwendungszwecke ist es auch bekannt, die Folie, welche als
Stromzuführung für den als Kathode dienenden Betriebselektrolyt dient aufzurauhen bzw. mit einer Oxidschicht
zu versehen.

Die Abstandshalter, in welchen der flüssige Betriebselektrolyt vorhanden ist, bestehen im allgemeinen aus
saugfähigem Kondensatorpapier.

Bei der Herstellung müssen die Wickel nach Beendigung
des Wickelvorganges in ihrer Endlage zuverlässig und
auf Dauer fixiert werden. Ist dies nicht der Fall, so

15.07.1980
Sac 1 Pj

springt der Wickel aufgrund der elastischen Eigenschaften der verwendeten Folien teilweise auf und es kommt dadurch zu Störungen des Fertigungsvorganges, z.B. beim Einbau des Wickels in das Kondensatorgehäuse. Ändert sich die gegenseitige Lage der Folien während des Betriebs des Kondensators, so bleiben dessen elektrische Werte wie Kapazität, Verlustfaktor und Scheinwiderstand nicht konstant, sondern sie verschlechtern sich erheblich.

Bei Elektrolytkondensatoren, deren Betriebselektrolyte vorzugsweise Äthylenglykol als Lösemittel enthalten, wird der Wickel nach Fertigstellung beispielsweise mit einem Selbstklebeband umwickelt und verklebt. Diese Klebebänder, die im allgemeinen aus einer dünnen Trägerfolie, wie beispielsweise Polyester oder Celluloseacetat, und einer Kleberschicht bestehen, besitzen eine genügende Adhäsionskraft und chemische Resistenz, so daß die Wickel, auch während des Betriebs des Kondensators bei seiner oberen Grenztemperatur von z.B. 85 oder 105 $^\circ$C dauerhaft und zuverlässig zusammengehalten werden.

Heute wird in zunehmendem Maße eine Miniaturisierung elektrischer Bauelemente gefordert. Dies läßt sich bei Elektrolytkondensatoren beispielsweise durch höhere Aufrauhgrade der Anodenfolie bewerkstelligen, wodurch die Volumenkapazität weitgehend vergrößert werden kann. Dies setzt allerdings den Einsatz höher leitfähiger Betriebselektrolyte voraus, da mit den höheren Aufrauhgraden auch eine Erhöhung des Verlustfaktors einhergeht.

Höher leitfähige Betriebselektrolyte verwenden andere organische Lösungsmittel als Äthylenglykol. Aus dem

0044068

-3-    VPA    80 P 1 1 0 6 E

Stand der Technik sind beispielsweise N-Dimethylformamid, $\gamma$-Butyrolacton oder Methoxyethanol als Lösungsmittel bekannt. Diese Lösungsmittel lösen entweder die verwendeten Kleberbänder oder deren Kleberschicht auf, so daß sich der Wickel wieder öffnen kann, was zu den vorstehend aufgezeigten Nachteilen führt.

Es gibt zwar Folien, die sich nicht in den genannten Lösungsmitteln auflösen, es sind bis jetzt allerdings noch keine Kleber bekannt, die völlig beständig gegen diese Lösungsmittel sind. Die chemische Beständigkeit der Kleber gegen derartige Lösungsmittel ist besonders gering, wenn die mit dem Klebeband verschlossenen Wickel unmittelbar nach dem Verkleben beim Imprägniervorgang mit dem heißen Betriebselektrolyt in Berührung kommen.

Zusätzlich zu dem Vorteil der hohen Leitfähigkeit weisen Betriebselektrolyte mit den neuen Lösungsmitteln besonders bei hohen Betriebstemperaturen über 85 °C und langer Betriebsdauer deutliche Vorteile gegenüber den auf der Basis von Äthylenglykol hergestellten Elektrolyten auf.

Aufgabe der Erfindung ist es, einen Wickel-Elektrolytkondensator anzugeben, bei dem der Wickel auch bei Verwendung der neuartigen Lösungsmittel-Elektrolyte nach dem Wickelvorgang und während des Betriebs des Kondensators nicht aufgeht.

Diese Aufgabe wird erfindungsgemäß dadurch gelöst, daß der Wickel durch einen Schrumpfschlauch zusammengehalten ist.

Vorteilhafterweise entspricht die Länge des Schrumpfschlauches entweder ungefähr der Länge des Wickels oder
sie ist wesentlich kleiner, so daß der Wickel beispielsweise nur durch einen aufgeschrumpften Ring in der Mitte
zusammengehalten ist.

Das Schrumpfschlauchmaterial besteht vorteilhafterweise
aus Polyäthylen oder Polypropylen, welche resistent
gegenüber den genannten Lösungsmitteln sind.

Die Wandstärke des Schrumpfschlauches kann 50 bis 500 μm
betragen, während der Schrumpfwert in radialer Richtung
des Schrumpfschlauches ca. 50 % seines Außendurchmessers
betragen kann.

Da die genannten Schrumpfschlauchmaterialien resistent
gegen die genannten Lösungsmittel sind, ist der Wickel
auf Dauer auch bei Betrieb bei hohen Temperaturen
fixiert.

Bei der Herstellung werden Schrumpfschläuche verwendet,
deren Durchmesser etwas größer als der Wickeldurchmesser
ist, wobei es wegen des Schrumpfwertes nicht notwendig
ist, den Schrumpfschlauchinnendurchmesser exakt dem
Wickelaußendurchmesser anzupassen. Zur Auslösung des
Schrumpfvorganges können alle üblichen Wärmequellen verwendet werden, die den Schrumpfschlauch auf eine ausreichend hohe Temperatur zu erhitzen vermögen. Als besonders geeignet sind beispielsweise Infrarotstrahler,
Heißluftgebläse oder Durchlauföfen wie z.B. Tunnelöfen
bekannt.

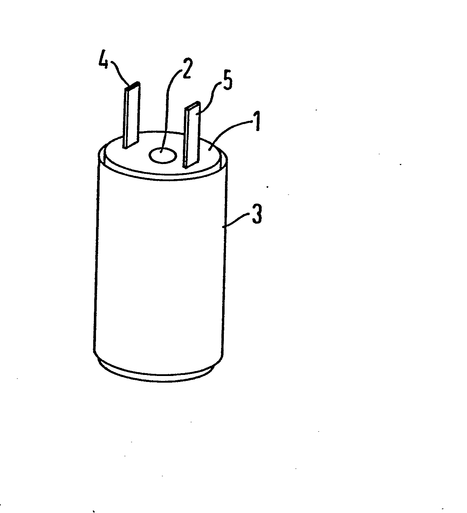

In der Figur ist ein Ausführungsbeispiel des erfindungsgemäßen Wickel-Elektrolytkondensators dargestellt. Der Wickel 1 besteht aus den aufgewickelten Elektrodenfolien und den mit dem Betriebselektrolyt getränkten Abstandshaltern. Der Wickel 1 weist ein Kernloch 2 auf und ist durch den Schrumpfschlauch 3 fixiert. An den beiden Elektrodenfolien sind Stromzuführungselemente 4, 5 angeordnet. Der Wickel 1 kann beispielsweise in ein Aluminiumgehäuse eingebaut werden, wobei die Stromzuführungen 4, 5 isoliert durch einen das Gehäuse verschließenden Deckel nach außen geführt werden. Es ist aber auch bekannt, die Stromzuführung für die Kathodenfolie mit dem Gehäuse zu verbinden.

6 Patentansprüche,
1 Figur.

<u>Patentansprüche</u>

1. Wickel-Elektrolytkondensator, welcher aus miteinander verwickelten Elektrodenfolien und mit einem Betriebselektrolyt getränkten Abstandshaltern besteht,
d a d u r c h   g e k e n n z e i c h n e t , daß der
Wickel (1) durch einen Schrumpfschlauch (3) zusammengehalten ist.

2. Wickel-Elektrolytkondensator nach Anspruch 1,
d a d u r c h   g e k e n n z e i c h n e t , daß die
Länge des Schrumpfschlauches (3) ungefähr der Länge des
Wickels (1) entspricht.

3. Wickel-Elektrolytkondensator nach Anspruch 1,
d a d u r c h   g e k e n n z e i c h n e t , daß die
Länge des Schrumpfschlauches (3) wesentlich kleiner als
die Länge des Wickels (1) ist.

4. Wickel-Elektrolytkondensator nach einem der Ansprüche
1 bis 3,  d a d u r c h   g e k e n n z e i c h n e t ,
daß der Schrumpfschlauch (3) aus Polyäthylen oder Polypropylen besteht.

5. Wickel-Elektrolytkondensator nach einem der Ansprüche
1 bis 4,  d a d u r c h   g e k e n n z e i c h n e t ,
daß die Wandstärke des Schrumpfschlauches (3) 50 bis
500 µm beträgt.

6. Wickel-Elektrolytkondensator nach einem der Ansprüche
1 bis 5,  d a d u r c h   g e k e n n z e i c h n e t ,
daß der Schrumpfwert in radialer Richtung des Schrumpfschlauches (3) ca. 50 % seines Außendurchmessers entspricht.